# EUROPEAN PATENT SPECIFICATION

(11) **EP 2 992 365 B1**
(45) Date of publication and mention of the grant of the patent: **04.04.2018**
(21) Application number: 14791064.0
(22) Date of filing: 29.04.2014
(51) Int. Cl.: G01V 8/10, G01M 3/04, G08B 13/196, H04N 21/80, G01M 3/00, G01M 3/38, H04N 5/33, G06K 9/00, G06K 9/20

(54) **OBJECT DETECTION**
OBJEKTDETEKTION
DÉTECTION D'OBJETS

(30) Priority: 29.04.2013 US 201313873114; 29.04.2013 CA 2814294
(43) Date of publication of application: 09.03.2016
(73) Proprietor: Intelliview Technologies Inc., Calgary, Alberta T2E 2NA (CA)
(72) Inventor: BADAWY, Wael, Calgary, Alberta T2E 2N4 (CA); RAHMAN, Choudhury, Calgary, Alberta T2E 2N4 (CA)
(74) Representative: Rankin, Douglas
(86) International application number: PCT/CA2014/050407
(87) International publication number: WO 2014/176693

(56) References cited:
- US-A1- 2003 063 006
- US-A1- 2005 058 321
- US-A1- 2005 131 646
- US-A1- 2012 045 090
- US-A1- 2012 268 594
- US-B2- 7 969 470
- US-B2- 7 969 470

## Description

### TECHNICAL FIELD

### Object detection.

### BACKGROUND

A variety of leak detection methods are known, including those described in United States patent nos. 4,772,789; 4,963,742; 5,001,346; 5,210,526; 6,812,846 and 7,460,980.
US 2005/058321 discloses a computerized method of image analysis including receiving first image data for a plurality of first video frames representing a first scene.
US 2012/045090 discloses multi-mode video event indexing including determining a quality of object distinctiveness with respect to images from a video stream input.

### SUMMARY

The inventors have disclosed a new apparatus for object detection, including leak and bird detection.

There is thus provided an object detection apparatus, comprising a camera having video output comprising frames; and a digital video processor configured to receive the video output from the camera, detect and track a blob in the frames to determine a trajectory for the blob and trigger an alert message if the trajectory of the blob is characteristic of the object.

A method of object detection is also described, comprising: producing video output with a camera, the video output comprising frames; detecting and tracking a blob in the frames, using a digital video processor, to determine a trajectory for the blob; and triggering an alert message upon the trajectory of the blob being characteristic of the object.

In various embodiments, there may be included any one or more of the following features:
The digital video processor is configured to detect a blob and identify the blob as a leak upon the blob matching leak criteria. The digital video processor is configured to trigger an alert or alarm upon the blob persisting beyond a threshold. The digital video processor is configured to trigger an alert upon the blob persisting beyond a first threshold and an alarm upon the blob persisting beyond a second threshold. The digital video processor may detect and classify the object as a leak, and provide an alert or alarm. The digital video processor may detect and classify the object as a bird, and provide a bird report. There is a weather station and the digital video processor is configured to receive input from the weather station and take the input from the weather station into account in determining whether to trigger an alert. A radar gun is connected to provide input signals to the digital video processor that correspond to an object's speed and in which the digital video processor is configured to use the input signals to classify the blob. The digital video processor is configured to identify the blob as a bird upon the blob crossing a region or line within the field of view of the camera and the speed of the blob exceeding a bird detection threshold. Identifying the blob as a leak upon the blob matching leak criteria. Triggering further comprises triggering an alert or alarm upon the blob persisting beyond a threshold. Triggering further comprises triggering an alert upon the blob persisting beyond a first threshold and an alarm upon the blob persisting beyond a second threshold. Receiving input from a weather station and taking the input from the weather station into account in determining whether to trigger an alert message. Receiving input signals from a radar gun, the input signals corresponding to an object's speed, and further comprising using the input signals to classify the blob. Identifying the blob as a bird upon the blob crossing a region or line within the field of view of the camera and the speed of the blob exceeding a bird detection threshold. The digital video processor carries out the disclosed detection methods.

These and other aspects of the device and method are set out in the appended claims.

### BRIEF DESCRIPTION OF THE FIGURES

Embodiments will now be described with reference to the figures, in which like reference characters denote like elements, by way of example, and in which:
Fig. 1 is a schematic showing a leak detection system;
Fig. 2 is a high level flow diagram of a leak detection algorithm;
Fig. 3 is a flow diagram of frame capture and background modeling;
Fig. 4 is a flow diagram of object detection;
Fig. 5 is a flow diagram of object characterization and decision making;
Fig. 6 shows an exemplary display panel for a leak detection digital video recorder;
Fig. 7 shows an exemplary event notification panel for a leak detection digital video recorder;
Fig. 8 shows a vessel being monitored along with object areas drawn; and
Fig. 9 shows an algorithm for configuring a digital video processor to detect a bird.

### DETAILED DESCRIPTION

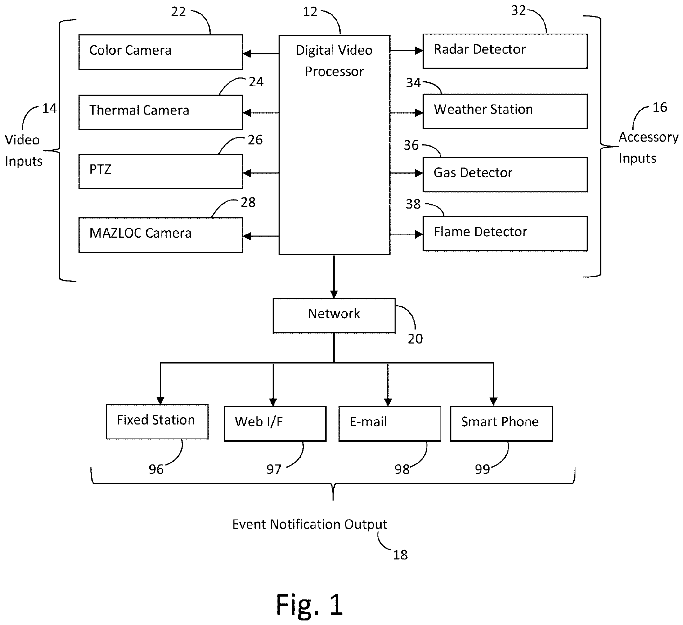

Immaterial modifications may be made to the embodiments described here without departing from what is covered by the claims. Referring to Fig. 1, there is shown a leak detection apparatus 10 comprising a digital video processor (DVP) 12, one or more video inputs 14 connected to output frames of video to the DVP 12, one or more accessory inputs 16 connected to output sensor signals to the DVP 12, and event notification outputs 18 that may be connected directly or indirectly, for example through a network 20 such as the internet, to receive alert messages from the DVP 12. The video inputs 14 may comprise one or more of a color camera 22 such as a Day/Night Color Camera IVT-LIT90ESHQ, a thermal camera 24 such as Thermal Camera IVT-XWTA-19, pan-tilt-zoom camera 26 such as a conventional security camera, and hazardous location camera 28 such as Day/Night Hazardous Location Camera IVT-C1D190ESHQ.

The accessory inputs 16 may comprise one or more of a radar detector 32, weather station 34, gas detector 36 and flame detector 38. The inputs 14 and 16 may be conventional commercially available products. The DVP 12 may comprise a digital video recorder, with built in or added encoder, having digital video processing circuitry or a digital video recorder combined with separate encoder and processor. The DVP 12 may comprise conventional digital video recording and processing hardware, configured with software for carrying out the functions disclosed here to receive frames of video output from one or more of the video inputs 14, detect and track a blob in the frames to determine a trajectory for the blob and trigger an alert message if the trajectory of the blob is characteristic of a leak. For example, the DVP 12 may comprise a SmrtDVR IVT-DVR405-05 4Ch DVR.

The camera 22, 24, 26 and/or 28 may be connected via 75 ohm BNC (RG 59U/RG 6) cable or other suitable communication link to the DVP 12. An exemplary DVP 12 may be equipped with a H.264 hardware encoder, capable of encoding analog video feed up to a maximum of 4CIF (704x480) resolution at 30fps. Baseline profile is used with a quality settings of 30 and GOV settings of 5. Leak analytic preferably uses two cameras; one thermal 24 and one color 22. The thermal camera 24 is preferably the one in which the algorithm runs for leak detection. The color camera 22 or other cameras 26, 28 are preferably used for visual reference and verification. The analysis may for example be done on raw frame buffer (YUV) of CIF (352x240) resolution at 10fps. The video may for example be recorded in H.264 compressed format of which resolution and frame rate are user selectable. In the exemplary embodiment, supported resolutions and frame rates for recorder video are CIF/2CIF/4CIF and 5/10/15/30 fps, respectively, but this will change as standards and available equipment change.

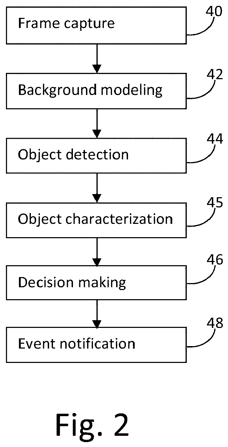

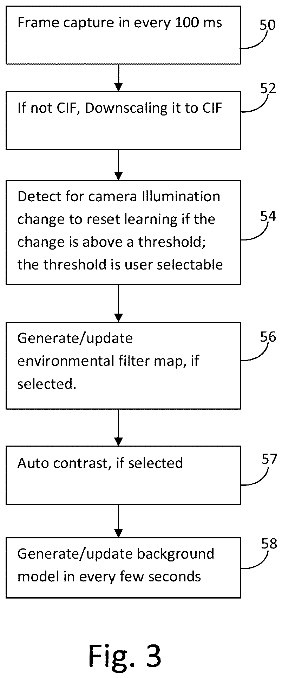

As illustrated in Fig. 2, following frame capture 40, the leak detection algorithm goes through a series of stages comprising background modeling 42, object detection 44, object characterization 45, decision making 46 and event notification 48. Background modeling 42 is carried out as a precursor to the object identification process and includes a learning process when first initiated. The frame capture and background modeling stage is shown in Fig. 3 in the following steps: 50 a frame is captured at a time rate dependent on the hardware, 52 frame processing, again hardware dependent, but in this example to ensure the frame is downscaled to a Common Intermediate Format (CIF) if not already CIF, 54 check camera illumination, if this requires changing, reset learning process if change is a above a user selectable threshold, 56 generate or update an environmental filter map, if selected, 57 adjust or set auto contract and 58 generate or update the background model from time to time, such as every few seconds. The environmental filter step 58 may be obtained from data from an accessory input such as a weather station 34 to filter out effects of weather, such as glare, rain or snow.

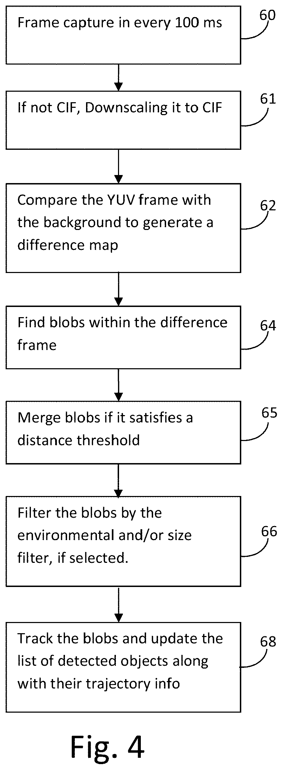

An exemplary object detection and characterization process is shown in Fig. 4, and includes the following steps: 60 a frame is captured at a time rate dependent on the hardware, 61 frame processing, again hardware dependent, but in this example to ensure the frame is downscaled to a Common Intermediate Format (CIF) if not already CIF, 62 a frame from the thermal camera 24, such as a YUV encoded frame (though other formats may be used), is compared with the background to generate a difference map, 64 blobs within the difference frame are detected by any one of a variety of conventional digital image processing methods, 65 merge blobs if the distance between blobs (x-y pixel distance for example), satisfies a user set distance threshold, 66 filter the blobs for environmental and/or size effects (as for the background to remove for example weather effects) and 68 track the blobs to determine their trajectory and update a list of blobs with the tracking information, including an identification code for each blob and the trajectory information associated with the blob. Blob detection may use HASM as disclosed in "A low power VLSI architecture for mesh-based video motion tracking" Badawy, W.; Bayoumi, M.A. IEEE Transactions on Circuits and Systems II: Analog and Digital Signal Processing, Volume 49, Issue 7, pp 488- 504, July 2002; and also in "On Minimizing Hierarchical Mesh Coding Overhead: (HASM) Hierarchical Adaptive Structured Mesh Approach", Badawy, W., and Bayoumi, M., Proc. IEEE Int. Conf. Acoustics, Speech and Signal Processing, Istanbul, Turkey, June 2000, p. 1923-1926; and "Algorithm Based Low Power VLSI Architecture for 2-D mesh Video-Object Motion Tracking", IEEE Transactions on Circuits and Systems for Video Technology, vol. 12, no. 4, April 2002 and United States patent no. 7,986,810.

In the detection and tracking process of Fig. 4, blobs are detected as each new frame is compared and analyzed with the background model to find the difference. The blobs may be detected as blob rectangles (set of x-y pixel coordinates forming a rectangle) or other polygons. These blob rectangles are further analyzed in order to combine together to form an object. This is done in order to interpret one physical object just by one object and not by multiple smaller objects.

The object characterization depends on the analytic. For leak analytic the object characterization factors (leak criteria) are: Object has to appear first inside the area of interest. Object cannot appear outside the area of interest and move inside. Object can disappear in the next frame but can reappear in the following frame. Object must not move beyond a defined boundary from where it first appeared in the frame. Object has to be within the area of interest in the successive frames before the leak alarm is set off. Objects may be characterized as leaks, drips, sprays and pools.

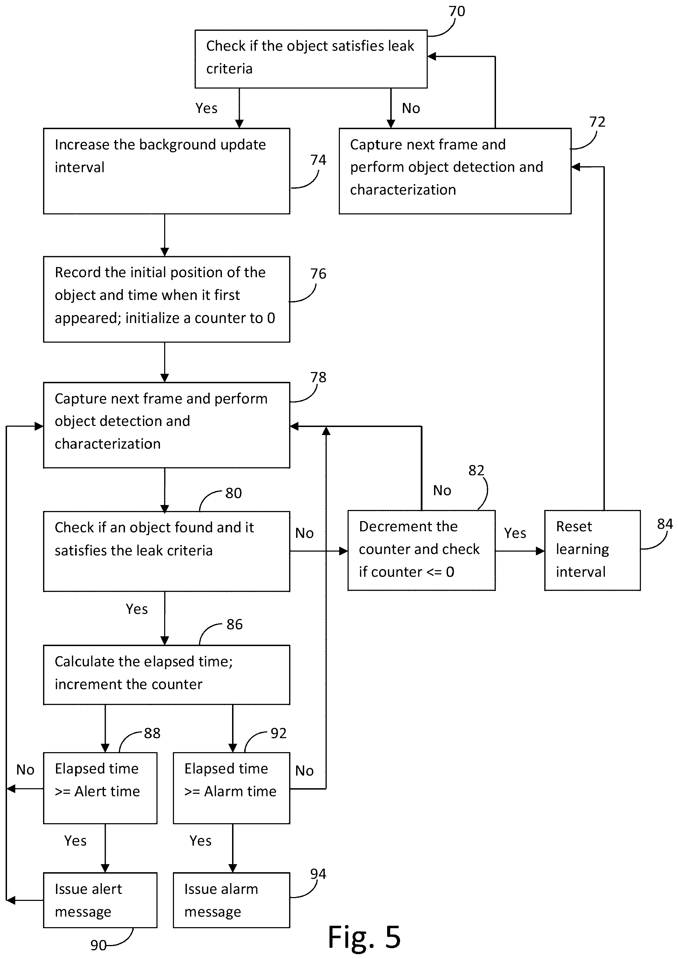

The decision making algorithm depends on two user defined parameters: Time to Alert and Time to Alarm. "Time to Alert" is the time that the algorithm waits for until it sets off an "Alert" to warn the user. The alert basically indicates that there is a potential leak. "Time to Alarm" is the time till when the algorithm waits before it turns the "Alert" into "Alarm" state. The algorithm is shown in Fig. 5. The counter is linear when incrementing and non-linear when decrementing. Its decay rate increases while decrementing. Thus, as shown in Fig. 5, the decision making algorithm follows these steps: 70 check if the object satisfies leak criteria, 72 if no, capture next frame and perform object detection and characterization, 74, if yes, increase the background update interval, 76 record the initial position of the blob (object) and time when it first appeared, initialize a counter to zero, 78 capture a next frame (does not have to be the next frame, depending on frame rate and desired sensitivity) and perform object detection and characterization as in Fig. 4, 80 check of an object is found and it satisfies the leak criteria, 82 if no object found that satisfies leak criteria, decrement the counter and check if counter less than or equal to zero, and if no again, return to step 78, and if counter is less than or equal to zero, then step 84 reset learning interval and return to step 72, if an object is found and it satisfies leak criteria in step 80, then 86 calculate the elapsed time since the object first appeared, 88 if the elapsed time is greater than or equal to an alert time (first threshold) issue an alert message 90 otherwise return to step 78, and 92 if the elapsed time is greater than the alarm time (second threshold) issue an alarm message otherwise return to step 78. A leak is therefore characterized, and an alert or alarm triggered, if it meets the criteria and persists after its initial appearance as a leak.

For event notification, in the event of an alert or alarm the system can be programmed to send the notification to the user in several ways. System can send the notification to a central monitoring station 96, to email 98 or to a handheld smart phone 99 with mobile app. The events can also be viewed through web browser 97 (for example Internet Explorer/Chrome) by logging into the DVP 12. The notification contains alert/alarm event message and may include snapshots from the thermal camera 24 and color camera 22 (if equipped) or other camera 26, 28. System can also be programmed to set off a buzzer or siren through its digital IO interface or even send notification to SCADA system through RTU/MODBUS interface.

When an alarm occurs, or at other times, the system 10 may use the thermal camera 24 or one of the other video inputs 14 to capture and store an image of the field of view of the thermal camera 24. The system 10 is preferably self-contained and able to operate on localized power when available, or equipped with its own power source such as battery, diesel generator, solar, wind or fuel cell. In hazardous location applications, the system 10 should be installed in approved enclosures, such as Class 1 Division 1 and Division 2 enclosures, and built to withstand extreme temperatures. Video from any of the inputs 14 may be stored in the DVP 12 for one touch playback and instant video tagging. DVP 12 may be connected to monitor hundreds of cameras and devices as well as providing leak detection, color matching, security analysis and more in a few rack mountable devices. Camera coverage varies by type and application, but may for example be placed from 5 m to 150 m from the target area.

Current thermal camera technology requires a temperature difference of 5 degrees C for the camera to distinguish between objects. When external temperatures match the temperature of the product in a pipeline (5 degrees plus/minus), the detection system will not be able to detect leaks. To resolve this, the DVP 12 can accept a communications input from the operator of the equipment being monitored, such as a Modbus or other Scada input, to indicate product temperature, and the Weather Station 34 can be used to indicate ambient temperature. When the DVP 12 sees an ambient thermal match, it can be programmed to send notifications and periodic images using the color camera 22 for visual verification to a monitoring station 96.

In a blizzard, the thermal camera 24 cannot "see" the target area. Using the weather station 34 as an input to the DVP 12, the DVP 12 may send notifications and periodic images using the color camera 22 for visual verification to a monitoring station 96. High winds can cause movement in masts and poles and cause false alarms. Guy wires are recommended whenever possible to secure the supports for the inputs 14. DVP 12 when operated with a thermal camera 24 as the primary source of leak detection information may cause an alarm if personnel are within the field of view of the thermal camera 24. Alert and Alarm delays programmed into the solution are used to ignore personnel and vehicles passing through the area. However, at times, personnel will be required to stay within the area of interest and due to this, will initiate an alarm. To resolve this, a switch may be installed that can disable the operation of the DVP 12 while personnel are onsite. Once finished, personnel can switch the DVP 12 back on, or the DVP 12 can be programmed to restart automatically after a certain time period.

In normal operation, the thermal sensor 24 is able to pick up the thermal signature of a fluid spray or flow emanating from an enclosed space that would typically have a different temperature than the outdoor conditions. During day time, the color camera 22 may optionally be used as a visual reference to detect the oil or liquid accumulation over a surface. The DVP 12 can also use the color camera 22 to take snapshots of the scene to periodically send to the user for visual verification of operation. The snapshots can be sent to a remote monitoring station 96 or as email attachments 98 via the user's own network, 3G Cellular, or via a satellite communication solution.

Depending on the type of pipeline or vessel is being monitored and what is being transported through the pipe or stored in the vessel, characteristics of a spill could vary significantly. A combination of thermal 24 and video cameras 22 may be key to successfully identifying leaks. This way, temperature differences can be used to accurately identify leaks or spills through analysis, and color and size characteristics can be used for manual verification.

When using thermal camera 24, heat is the major deciding factor for detecting a pipeline leak. For the system 10 to be the most effective in monitoring a pipeline, it should be setup along the critical points of the pipeline. Ideally, the setup is mounted 30 feet (10
meters) above the ground so that the cameras scan the area below allowing the video analytics software to detect any scene anomalies that may result from liquid spills, sprays, leaks, or pools. Both the color camera 22 and the thermal camera 24 are used in conjunction
to improve detection during day time and night time. The video image must have a clear picture with no noise interference for the camera or other input 14 to accurately monitor the area and detect pipeline leaks effectively. Preferably, the pipeline or other vessel should cover a minimum of 20% of the thermal camera's field of view. This means that the camera should be setup so that 20% of the image is taken up by the pipeline or other vessel. The camera can be up to 150 metres away from the furthest part of the pipeline and will effectively cover at least 30 metres of pipeline. To make an accurate detection from an image with a field of view of 240 x 320 pixels, 256 pixels must show a temperature difference. This means that a spray taking up 0.34% of the image will be able to be detected.

Detection area depends on equipment used, but the following chart illustrates the detection area at different distances with a 19mm and 60mm camera for example.

| Distance from Camera (m) | Lens Type | | | |
|---|---|---|---|---|
| | 19 mm | | 60 mm | |
| | Coverage Area (m2) | Minimum Detection Area (m2) | Coverage Area (m2) | Minimum Detection Area (m2) |
| 5 | 3.61 | 0.0030 | | |
| 25 | 90.41 | 0.0753 | | |
| 50 | 361.66 | 0.3014 | 33.29 | 0.0277 |
| 75 | 813.73 | 0.6781 | 74.91 | 0.0624 |
| 100 | 1446.64 | 1.21 | 133.18 | 0.1110 |
| 125 | 2260.38 | 1.8836 | 208.09 | .1734 |
| 150 | 3254.95 | 2.7125 | 299.65 | .2497 |

For example, if you are using a 19 mm thermal camera, you need to have the camera at a maximum distance of 80 metres to be able to detect a 1 m2 liquid spill. A larger spill can be detected at further distance. In order to detect a spill, it should cover at least 6 pixels across its critical dimension, which is equivalent to 8 pixels per meter at 80 metre distance. Follow camera hardware mounting instructions, and minimize cabling (power and video) in order to prevent signal and power degradation.

Wiring and cabling requirements follow the standards defined by each technology. The following table addresses common applications for each component.

| **Part Number** | **Usage** | **Cable Type** | **Max Length** |
|---|---|---|---|
| SmrtDVR IVT-DVR405-05 4 ch DVR | Lan/Wan | CAT5e | 100m |
| SmrtDVR IVT-DVR405-05 4 ch DVR | Digital I/O | UL Shielded | 1000m |
| SmrtDVR IVT-DVR405-05 4 ch DVR | Serial I/O | UL Shielded | 3m |
| SmrtDVR IVT-DVR405-05 4 ch DVR | RS485 | UL Shielded | 1000m |
| SmrtDVR IVT-DVR405-05 4 ch DVR | DC Out | 12v - 5v | 1A Maximum |
| SmrtDVR IVT-DVR405-05 4 ch DVR | Audio In | UL Shielded | 3m |
| Day/Night Camera IVT-C1D190ESHQ | Video | RG6U | 500m |
| Day/Night Camera IVT-LIT90ESHQ | Video | RG6U | 500m |
| Thermal Camera IVT-XWTA-19 | Video | RG6U | 500m |
| All Cameras | Power | Varies | Varies |

Note: Actual cable lengths vary depending on guage, type and connectors. During step up, ensure all required components are connected. This should include the thermal camera connected to a CH, the color camera connected to a CH, the power connected to IGN, the monitor connected to VGA, a USB mouse connected to any USB port, and a keyboard connected to any USB port. In order for the device to connect externally and send alarms, a LAN or Wireless device will also need to be connected and configured according to its requirements.

The DVP 12 may be set up to show operators real-time live feed using connected cameras, allow operators can review recorded video, analyze video images to determine if preset user-defined rules have been broken and decide if real-time alerts need to be generated, send a real-time event notification when a rule has been breached, transmit live video data to monitoring stations, permit access to alarm notification, video data, and analytic setup via Internet Explorer or web access software, and read and write analog and digital inputs and outputs (for example to be used for interacting with local devices such as gate locks and PTZ cameras).

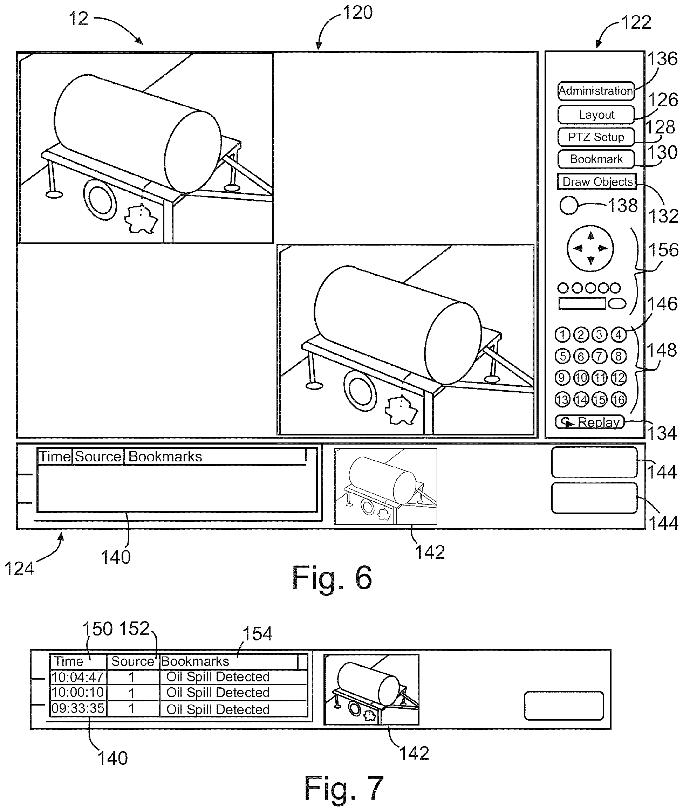

Referring to Fig. 6, the DVP 12 may include a video panel 120 for displaying one or more of live camera feed (from connected inputs 14), playback of recorded video from the DVP 12 or stored archives and instant display for the alarms video 22. The DVP 12 may be provided with a control panel 122 to access administrative options which may be accessed using administration button 136, provide a Layout button 126 for various layout options, tag video using a bookmark button 130, control the PTZ camera functions, select the cameras, disable or enable analytics and review recorded video using a replay button 134. The DVP 12 may be provided with an alarm control panel 124 including a list 140 of alarms and system events, an alarm quick preview screen 142 and information screens 144 such as the current date and time. Access to the administration interface allows access to the DVP 12 settings, alarm rule setup, as well as exiting the DVP 12.

Layout options are used to configure the way cameras are arranged on the screen. A PTZ setup button 128 may be used for configuration of PTZ camera 26 presets, auto-panning and camera patterns. A bookmark button 130 may be used for manually triggering an alarm. A draw objects button 132 and corresponding function may be used to track moving objects by showing a trail of path (trajectory) as well as the outline of the analytic. A display 138 show free disk space. PTZ Controls 156 may be used to operate a Pan-Tilt-Zoom (PTZ) camera 26 in case one is connected to the system. Presets for PTZ controls can also be set here. Camera controls buttons 146 on the control panel may be used to indicate which cameras are connected and operating. A replay control panel button 134 may be used to switch to the control replay panel for recorded video and activates instant backwards playback of the current video.

Referring to Fig. 7, an event notification panel may be used including an event notification list box 140 that contains all of the alarms and system events that have occurred since the software was started. These can be alarms that have been triggered by the analytics engine, or notifications intended to inform the operator about something specific such as the state of the software. For example an alarm notification triggered by a fluid leak or spill, or an event notification that the software started successfully. A preview screen 142 may be used to see a snapshot of the event that triggered the alarm, and may be activated by a click on the alarm entry in the grid. Each alarm notification can be sorted by time 150, camera number 152 or bookmark 154 as well as a rapid sort through footage and event isolation.

A Camera Controls panel 148, shown in Fig. 6, comprising the numbered buttons or icons 146 may be used. Each icon 146 represents a single camera, and the number inside is the number of the camera channel. If the icon has green background, it means that the camera is connected to the video channel and that the analytics for this camera are running. If the icon is just green with no red circle this indicates that the camera is on, but there are no analytics running. If the icon has blue background, the video channel is available, but either no camera is connected to the channel, or the camera has lost power. If the icon has a gray background, it means that the video channel is not available for this system. It is also possible that is not available because it has not been enabled by the licensing system.

If a camera is connected to the system and operating correctly, live feeds from the camera will be displayed in the appropriate camera display, alongside with the camera name, date, and other information. When an event alert has been triggered, a red border may be provided to flash on the related camera view window. Layouts and specification of which cameras to operate and view may be controlled by clicks on appropriate portions of the control panels.

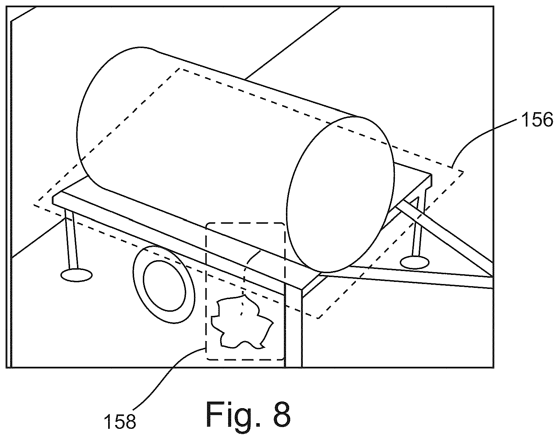

The Draw Objects button 132 may be used to control whether rule areas and objects detected by analytics are displayed on screen alongside with the camera feed. If analytics are enabled for a specific camera, then objects associated with those analytics may be tagged and drawn on the screen. If the Objects option is turned off, even though analytics are running, this may be omitted from the screen. What is then seen is just the raw feed from the camera. If on the other hand, the Draw Objects option has been enabled, the rules area may be outlined in red and distinct objects highlighted 158 on the screen in green. The objects are not necessarily randomly chosen, but instead are the objects identified by analytics. If there are no analytics running for this camera then no objects will be highlighted. No objects will also be highlighted if the analytics are running, but nothing is triggering alarms. This means the analytics are not identifying anything that fits their specified description. For the example in Fig. 8, the analytics were set to detect liquid sprays. The area of interest 156 was set up to look for liquids within that area. In this example, the analytic is running and has identified an object which is indicated in green (rectangular box 158). If no analytics are running, then no analytic boundary will be indicated and no objects will be detected.

Software on the DVP 12 may run as an application on a conventional operating system, for example in the *Microsoft Windows XP Embedded* environment and can be exited if needed. Under normal working conditions this is not necessary and is not recommended. The application may be designed to run all the time and should not be closed even if the user session is over. However, exiting the software can be helpful when debugging the system.

Depending on the size of the site being monitored, an application of the system 10 may use one or more pairs of thermal camera 24 and color camera 22, preferably mounted along side each other, for outdoor leak detection, one or more color cameras 22 for indoor leak detection and one or more security cameras 26 for example for monitoring one or more access points such as a gate. For example, the outside edge of an evaluation site area of interest may include a gate that vehicles and personnel are required to stop at. As the leak detection solution is based on thermal signatures, personnel (on foot or in vehicles, which radiate heat) that remain in the area for longer than 30 seconds may be required to use a manual switch to temporarily disable the functionality of the DVP 12 in order to prevent a false alarm. This will require training and awareness by personnel on the test site due to the test environment defined. However, it is important to note that this additional requirement will not be applicable to the majority of actual site applications due to remote locations, limited areas of interest, and fewer site visits. Colour detection without thermal video may be used in indoor applications such as pump houses, where specific conditions concerning lighting, product colour, and collection areas can be controlled.

Fixed station 96 may be used for network management and configuring the security profiles on multiple DVPs 12, viewing live video from cameras (fixed and PTZ), manage system users, generate audio/visual alarm and event notifications for leaks or security, video data management, archiving and summarizing and performing automated system diagnostics to ensure continual system operation.

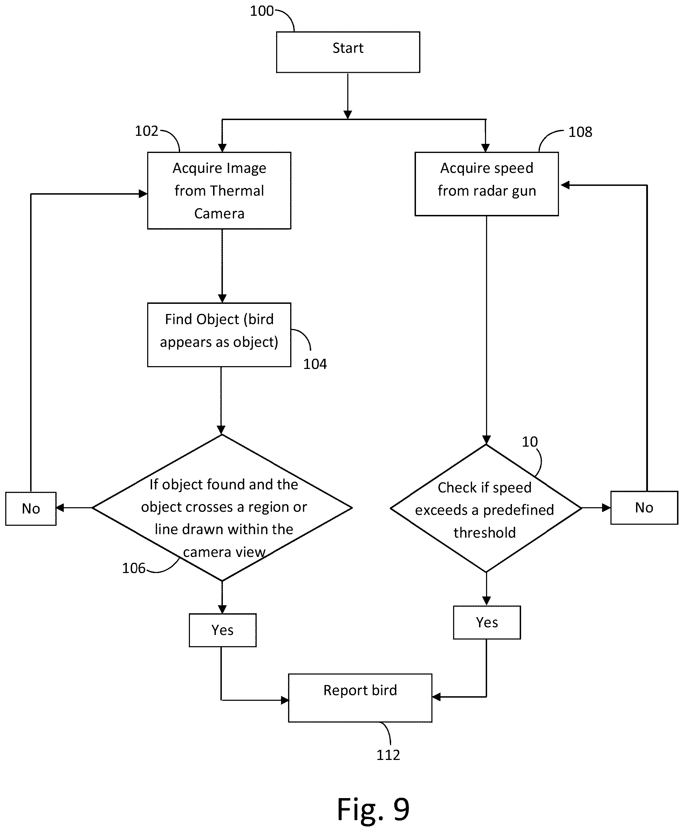

The DVP 12 may also be used to identify a bird using the radar gun 32 as shown in Fig. 9. The radar gun 32 is connected via a conventional communication link to provide input signals to the DVP 12 that correspond to an object's speed. The DVP 12 is configured to use the input signals to classify the blob for example as disclosed in Fig. 9. After the process is initiated at 100, an image is acquired at step 102 with the thermal camera 24 and a blob is located at 104 by a conventional detection method such as HASM and identified as an object and tracked. At 106, if the object does not cross a line or region within the field of view of the camera 24, then another image is acquired at step 102 and the process repeated. At 106, if the object crosses a region or line within the field of view of the camera, then the object is flagged as a potential bird. At the same time, at step 108, the DVP 12 acquires input signals from the radar gun 32 that are characteristic of the object's speed. At 110, if the speed of the object does not exceed a predefined speed or bird detection threshold, another speed is obtained with the radar gun 32 that is characteristic of the speed of another or the same object at a later time. If the speed of an object is above the bird detection threshold, and the object has been flagged as a potential bird based on location in the field of view of the thermal camera 32, then a bird is reported by the DVP 12.

## Claims

1. A leak detection apparatus (10), comprising:
a camera (24) having a field of view and producing video output comprising frames; and
a digital video processor (12) configured to receive the video output from the camera (24), **characterized in that** the digital video processor is configured to define an area of interest (156) within the field of view, detect (64) and track (68) a blob (158) in the frames to determine a trajectory for the blob and trigger (90) an alert message upon the trajectory of the blob being within the area of interest, not appearing outside the area of interest, remaining within the area of interest in successive frames, and persisting beyond a threshold time.

2. The leak detection apparatus (10) of claim 1 in which the digital video processor (12) is configured to trigger (92) an alarm upon the blob persisting beyond a second threshold time.

3. The leak detection apparatus of claim 1 or claim 2 further comprising a weather station (34) and the digital video processor (12) being configured to receive input from the weather station and take the input from the weather station into account in determining whether to trigger (90) the alert message.

4. The leak detection apparatus of any one of claim 1, 2 or 3 further comprising a radar gun (32) connected to provide (108) input signals to the digital video processor (12) that correspond to an object's speed and in which the digital video processor is configured to use (110) the input signals to classify (112) the blob as a bird.

5. The leak detection apparatus (10) of claim 4 in which the digital video processor (12) is configured to identify (112) the blob as a bird upon the blob crossing (106) a region or line within the field of view of the camera and the speed of the blob exceeding (110) a bird detection threshold.

6. A method of leak detection, comprising:
producing video output with a camera (24) having a field of view, the video output comprising frames;detecting (64) and tracking (68) a blob (158) in the frames, using a digital video processor (12), to determine a trajectory for the blob; **characterized by**
defining an area of interest (156) within the field of view;
triggering (90) an alert message upon the trajectory of the blob being within the area of interest, not appearing outside the area of interest, remaining within the area of interest in successive frames, and persisting beyond a threshold time.

7. The method of claim 6 further comprising triggering (92) an alarm upon the blob persisting beyond a second threshold time.

8. The method of claim 6 or 7 further comprising receiving input from a weather station (34) and taking the input from the weather station into account in determining whether to trigger (90) the alert message.

9. The method of any one of claims 6-8 further comprising receiving (108) input signals from a radar gun (32), the input signals corresponding to an object's speed, and further comprising using (110) the input signals to classify (112) the blob as a bird.

10. The method of claim 9 further comprising identifying (112) the blob as a bird upon the blob crossing (106) a region or line within the field of view of the camera and the speed of the blob exceeding (110) a bird detection threshold.

## Patentansprüche

1. Leckermittlungsvorrichtung (10), umfassend:
eine Kamera (24), die ein Sichtfeld hat und eine Videoausgabe erzeugt, die Einzelbilder umfasst; und
einen digitalen Videoprozessor (12), der dafür konfiguriert ist, die Videoausgabe von der Kamera (24) zu empfangen, **dadurch gekennzeichnet, dass** der digitale Videoprozessor dafür konfiguriert ist, einen interessierenden Bereich (156) innerhalb des Sichtfeldes zu definieren, ein BLOB (158) in den Einzelbildern zu ermitteln (64) und zu verfolgen (68), um eine Bewegungsbahn für das BLOB zu bestimmen, und eine Warnnachricht auszulösen (90), falls die Bewegungsbahn des BLOBs innerhalb des interessierenden Bereichs ist, nicht außerhalb des interessierenden Bereichs erscheint, in aufeinanderfolgenden Einzelbildern innerhalb des interessierenden Bereichs bleibt und über eine Schwellenwertzeit hinaus beständig bleibt.

2. Leckermittlungsvorrichtung (10) nach Anspruch 1, worin der digitale Videoprozessor (12) dafür konfiguriert ist, einen Alarm auszulösen (92), falls das BLOB über eine zweite Schwellenwertzeit hinaus beständig bleibt.

3. Leckermittlungsvorrichtung (10) nach Anspruch 1 oder 2, ferner eine Wetterstation (34) umfassend, und wobei der digitale Videoprozessor (12) dafür konfiguriert ist, Eingaben von der Wetterstation zu empfangen und beim Bestimmen, ob die Warnnachricht auszulösen (90) ist, die Eingaben von der Wetterstation zu berücksichtigen.

4. Leckermittlungsvorrichtung (10) nach einem der Ansprüche 1, 2 oder 3, ferner eine Radarpistole (32) umfassend, die verbunden ist, um Eingabesignale für den digitalen Videoprozessor (12) bereitzustellen (108), die der Geschwindigkeit eines Objekts entsprechen, und worin der digitale Videoprozessor dafür konfiguriert ist, die Eingabesignale zu verwenden (110), um das BLOB als einen Vogel einzustufen (112).

5. Leckermittlungsvorrichtung (10) nach Anspruch 4, worin der digitale Videoprozessor (12) dafür konfiguriert ist, das BLOB als einen Vogel zu identifizieren (112), falls das BLOB einen Bereich oder eine Linie innerhalb des Sichtfeldes der Kamera überquert (106) und die Geschwindigkeit des BLOBs einen Vogelermittlungsschwellenwert übersteigt (110).

6. Verfahren zur Leckermittlung, umfassend:
Erzeugen einer Videoausgabe mit einer Kamera (24), die ein Sichtfeld hat, wobei die Videoausgabe Einzelbilder umfasst;
Ermitteln (64) und Verfolgen (68) eines BLOBs (158) in den Einzelbildern unter Verwendung eines digitalen Videoprozessors (12), um eine Bewegungsbahn für das BLOB zu bestimmen;
**gekennzeichnet durch** Definieren eines interessierenden Bereichs (156) innerhalb des Sichtfeldes;
Auslösen (90) einer Warnnachricht, falls die Bewegungsbahn des BLOBs innerhalb des interessierenden Bereichs ist, nicht außerhalb des interessierenden Bereichs erscheint, in aufeinanderfolgenden Einzelbildern innerhalb des interessierenden Bereichs bleibt und über eine Schwellenwertzeit hinaus beständig bleibt.

7. Verfahren nach Anspruch 6, ferner umfassend: Auslösen (92) eines Alarms, falls das BLOB über eine zweite Schwellenwertzeit hinaus beständig bleibt.

8. Verfahren nach Anspruch 6 oder 7, ferner umfassend: Empfangen einer Eingabe von einer Wetterstation (34) und Berücksichtigen der Eingabe von der Wetterstation beim Bestimmen, ob die Warnnachricht auszulösen (90) ist.

9. Verfahren nach einem der Ansprüche 6 bis 8, ferner umfassend: Empfangen (108) von Eingabesignalen von einer Radarpistole (32), wobei die Eingabesignale der Geschwindigkeit eines Objekts entsprechen, und ferner umfassend: Verwenden (110) der Eingabesignale, um das BLOB als einen Vogel einzustufen (112).

10. Verfahren nach Anspruch 9, ferner umfassend: Identifizieren (112) des BLOBs als einen Vogel, falls das BLOB einen Bereich oder eine Linie innerhalb des Sichtfeldes der Kamera überquert (106) und die Geschwindigkeit des BLOBs einen Vogelermittlungsschwellenwert übersteigt (110).

## Revendications

1. Appareil de détection de fuite (10), comprenant :
une caméra (24) qui présente un champ de vision et qui produit une sortie vidéo qui comprend des images ; et
un processeur vidéo numérique (12) qui est configuré de manière à ce qu'il reçoive la sortie vidéo qui provient de la caméra (24) ;
**caractérisé en ce que** le processeur vidéo numérique est configuré de manière à ce qu'il définisse une zone d'intérêt (156) à l'intérieur du champ de vision, de manière à ce qu'il détecte (64) et à ce qu'il suive (68) un blob (158) dans les images afin qu'il détermine une trajectoire pour le blob et afin qu'il déclenche (90) un message d'alerte suite au fait que la trajectoire du blob est à l'intérieur de la zone d'intérêt, n'apparaît pas à l'extérieur de la zone d'intérêt, reste à l'intérieur de la zone d'intérêt dans des images successives et persiste au-delà d'un temps de seuil.

2. Appareil de détection de fuite (10) selon la revendication 1, dans lequel le processeur vidéo numérique (12) est configuré de manière à ce qu'il déclenche (92) une alarme suite au fait que le blob persiste au-delà d'un second temps de seuil.

3. Appareil de détection de fuite selon la revendication 1 ou la revendication 2, comprenant en outre une station météorologique (34), et le processeur vidéo numérique (12) étant configuré de manière à ce qu'il reçoive une entrée qui provient de la station météorologique et de manière à ce qu'il prenne en compte l'entrée qui provient de la station météorologique au niveau de la détermination de si oui ou non il convient de déclencher (90) le messages d'alerte.

4. Appareil de détection de fuite selon l'une quelconque des revendications 1, 2 et 3, comprenant en outre un pistolet radar (32) qui est connecté de manière à ce qu'il fournisse (108) au processeur vidéo numérique (12) des signaux d'entrée qui correspondent à une vitesse d'objet et dans lequel le processeur vidéo numérique est configuré de manière à ce qu'il utilise (110) les signaux d'entrée afin de classifier (112) le blob en tant qu'oiseau.

5. Appareil de détection de fuite (10) selon la revendication 4, dans lequel le processeur vidéo numérique (12) est configuré de manière à ce qu'il identifie (112) le blob en tant qu'oiseau suite au fait que le blob traverse (106) une région ou franchit une ligne à l'intérieur du champ de vision de la caméra et que la vitesse du blob excède (110) un seuil de détection d'oiseau.

6. Procédé de détection de fuite, comprenant :
la production d'une sortie vidéo à l'aide d'une caméra (24) qui présente un champ de vision, la sortie vidéo comprenant des images ;
la détection (64) et le suivi (68) d'un blob (158) dans les images, en utilisant un processeur vidéo numérique (12), afin de déterminer une trajectoire pour le blob ;
**caractérisé par** :
la définition d'une zone d'intérêt (156) à l'intérieur du champ de vision ;
le déclenchement (90) d'un message d'alerte suite au fait que la trajectoire du blob est à l'intérieur de la zone d'intérêt, n'apparaît pas à l'extérieur de la zone d'intérêt, reste à l'intérieur de la zone d'intérêt dans des images successives et persiste au-delà d'un temps de seuil.

7. Procédé selon la revendication 6, comprenant en outre le déclenchement (92) d'une alarme suite au fait que le blob persiste au-delà d'un second temps de seuil.

8. Procédé selon la revendication 6 ou 7, comprenant en outre la réception d'une entrée qui provient d'une station météorologique (34) et la prise en compte de l'entrée qui provient de la station météorologique au niveau de la détermination de si oui ou non il convient de déclencher (90) le message d'alerte.

9. Procédé selon l'une quelconque des revendications 6 à 8, comprenant en outre la réception (108) de signaux d'entrée qui proviennent d'un pistolet radar (32), les signaux d'entrée correspondant à une vitesse d'objet, et comprenant en outre l'utilisation (110) des signaux d'entrée afin de classifier (112) le blob en tant qu'oiseau.

10. Procédé selon la revendication 9, comprenant en outre l'identification (112) du blob en tant qu'oiseau suite au fait que le blob traverse (106) une région ou franchit une ligne à l'intérieur du champ de vision de la caméra et que la vitesse du blob excède (110) un seuil de détection d'oiseau.
